(19) Europäisches Patentamt
European Patent Office
Office européen des brevets

(11) EP 0 699 705 B1

(12) **EUROPÄISCHE PATENTSCHRIFT**

(45) Veröffentlichungstag und Bekanntmachung des Hinweises auf die Patenterteilung:
**05.01.2000 Patentblatt 2000/01**

(51) Int Cl.[7]: **C08J 7/04**
// C08L69:00

(21) Anmeldenummer: **95113098.8**

(22) Anmeldetag: **21.08.1995**

(54) **Vergütete Polycarbonatformteile**
Coated polycarbonate articles
Articles en polycarbonate revêtus

(84) Benannte Vertragsstaaten:
**BE CH DE ES FR GB IT LI NL SE**

(30) Priorität: **02.09.1994 DE 4431217**

(43) Veröffentlichungstag der Anmeldung:
**06.03.1996 Patentblatt 1996/10**

(73) Patentinhaber: **BAYER AG**
**51368 Leverkusen (DE)**

(72) Erfinder: **Bier, Peter, Dr.**
**D-47800 Krefeld (DE)**

(56) Entgegenhaltungen:
**EP-A- 0 524 524** **EP-A- 0 580 046**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 699 705 B1

Printed by Jouve, 75001 PARIS (FR)

## Beschreibung

Formteile aus aromatischen Polycarbonaten zeichnen sich durch Transparenz, hohe Schlagzähigkeit, hohe Wärmeformbeständigkeit und Dimensionsstabilität aus. Damit diese Teile äußeren Einflüssen besser widerstehen, werden sie oft mit einer vergütenden Oberflächenschicht versehen. Dies geschieht vorzugsweise durch Lackieren. Für die Funktionstauglichkeit der lackierten Teile, insbesondere über längere Zeit, ist eine ausreichende Haftung zwischen Oberflächenschicht und Substrat erforderlich.

Es wurde gefunden, daß man eine besonders gute Haftung zwischen den Polycarbonatformteilen und der Oberflächenschicht erhält, wenn man spezielle Polycarbonate als Substrat verwendet.

Die Erfindung betrifft ein Verfahren zur Beschichtung von speziellen hochwärmeformbeständigen Polycarbonaten, wobei die resultierende Beschichtung eine besonders gute Haftung auf dem Substrat und gleichzeitig ausgezeichnete optische Eigenschaften, insbesondere Transparenz aufweist.

Gegenstand der Erfindung ist ein Verfahren zur Beschichtung von Polycarbonatformteilen, das dadurch gekennzeichnet ist, daß man auf die Oberflächen eines Formkörpers aus einem Polycarbonat (A) mit $\overline{M}_w$ von 20 000 bis bis 300 000 auf Basis von 100 Mol-% bis 20 Mol-%, bezogen auf die Gesamtmenge von 100 Mol-% an Diphenoleinheiten, auf Basis eines Diphenols der Formel

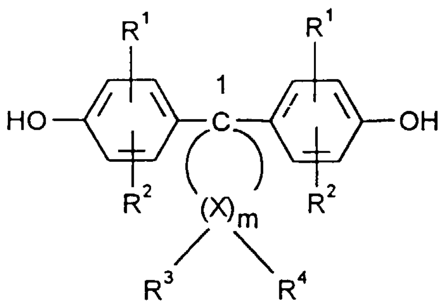

(Ia),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten,
ein Beschichtungsmaterial (B), das als vernetzbare Komponenten Agenzien mit Acrylat-, Allyl-, Epoxid-, Silanol-, Isocyanat-, Anhydrid-, Melaminfunktionen oder deren Kombination besitzt, in einer Dicke von 0,5 bis 200 µm aufträgt und thermisch bei Temperaturen von 130 °C bis 220 °C oder durch Bestrahlung bei Temperaturen von 130 °C bis 220 °C aushärtet, wobei thermische bzw. photochemisch härtende Katalysatoren zugesetzt werden können.

Ein weiterer Gegenstand der Erfindung sind die so erhaltenen Formkörper. Polycarbonate (A) sind hochmolekulare, thermoplastische, aromatische Polycarbonate mit $\overline{M}_w$ Molekulargewichten (Gewichtsmittel) von 20 000 bis 300 000, die bifunktionelle Carbonatstruktureinheiten der Formel (I) in Mengen von 100 Mol-% bis 20 Mol-%, bezogen auf die Gesamtmenge von 100 Mol-% an Diphenoleinheiten, enthalten

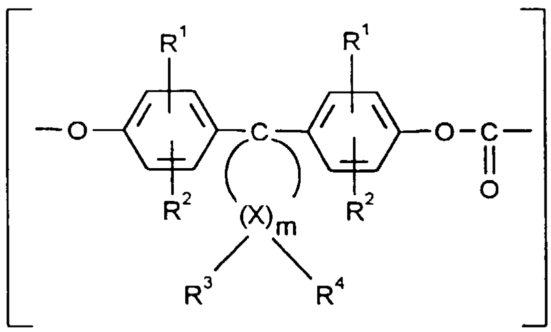

(I),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten.

Diese Polycarbonate und die zugrundeliegenden Dihydroxydiphenylcycloalkane der Formel (I) und die Herstellung beider Produkte sind in-der EP 359 953 ausführlich beschrieben. Ausgangsprodukte für die Polycarbonate (A) sind die Dihydroxydiphenylcycloalkane der Formel (Ia). In dieser Formel ist der bevorzugte Alkylrest Methyl; die X-Atome in α-Stellung zu dem Diphenyl-substituierten C-Atom (C-1) sind bevorzugt nicht dialkylsubstituiert, dagegen ist die Alkyldisubstitution in P-Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel I), beispielsweise die Diphenole der Formeln (Ib) bis (Id),

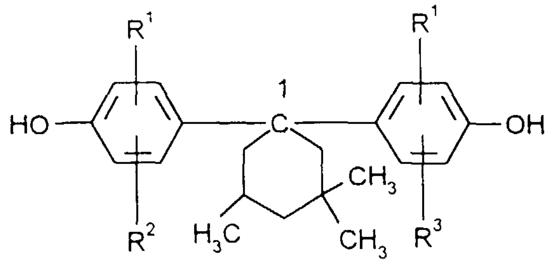

(Ib),

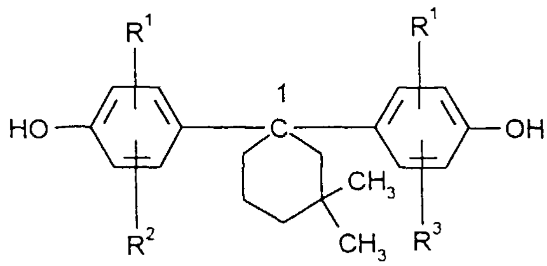

(Ic),

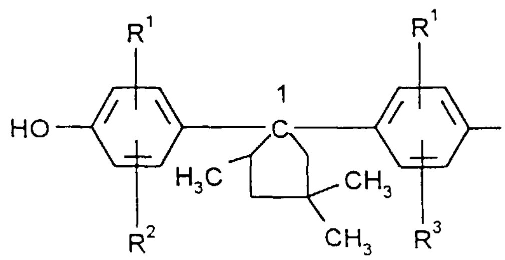

(Id),

wobei das 1,1-Bis-(4-hydroxyphenyl)-3,3,5-trimethylcyclohexan (Formel Ib mit $R^1$ und $R^2$ gleich H) besonders bevorzugt ist.

Es können sowohl ein Diphenol der Formel (Ia) unter Bildung von Homopolycarbonaten als auch mehrere Diphenole der Formel (Ia) unter Bildung von Copolycarbonaten verwendet werden.

Außerdem können die Diphenole der Formel (Ia) auch im Gemisch mit anderen Diphenolen, beispielsweise mit denen der Formel (Ie)

$$HO\text{-}Z\text{-}OH \qquad (Ie)$$

zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Besonders bevorzugte Diphenole der Formel (Ie) sind beispielsweise:
2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Das molare Verhältnis von Diphenolen der Formel (Ia) zu den gegebenenfalls mitzuverwendenden anderen Diphenolen der Formel (Ie), soll zwischen 100 Mol-% (Ia) zu 0 Mol-% (Ie) und 20 Mol-% (Ia) zu 80 Mol-% (Ie) liegen.

Die hochmolekularen Polycarbonate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die Polycarbonate können in an sich bekannter Weise verzweigt sein durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen. Einige Verzweiger mit drei oder mehr als drei phenolischen Hydroxylgruppen sind:

Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5-methyl-benzyl)-4-methylphenol, 2-(4-hydroxyphenyl)-2-(2,4-dihydroxylphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenylisopropyl)phenoxy]-methan und 1,4-Bis-[4',4"-dihydroxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate (A) dienen monofunktionelle Verbindungen in üblichen Mengen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (If) geeignet

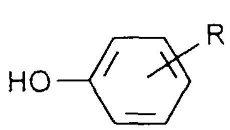

(If),

worin

R einen verzweigten $C_8$- und/oder $C_9$-Alkylrest darstellt.

Bevorzugt ist im Alkylrest R der Anteil an $CH_3$-Protonen 47 bis 89 % und der Anteil der CH- und $CH_2$-Protonen 53 bis 11 %; ebenfalls bevorzugt ist R in o-und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt. Für nähere Einzelheiten sei auf EP 359 953 verwiesen.
Die Polycarbonate (A) können vorzugsweise nach dem Phasengrenzflächenverfahren (vgl. H. Schnell "Chemistry and Physics of Polycarbonates", Polymer Reviews, Vol. IX, Seite 33ff., Interscience Publ. 1964) in an sich bekannter Weise hergestellt werden.
Die Polycarbonate (A) können auch nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.
Durch den Einbau der Diphenole der Formel (Ia) besitzen die Polycarbonate (A) hohe Wärmeformbeständigkeit.
Die besonders bevorzugten Polycarbonate (A) sind also solche, die Einheiten der Formel (Ig) enthalten

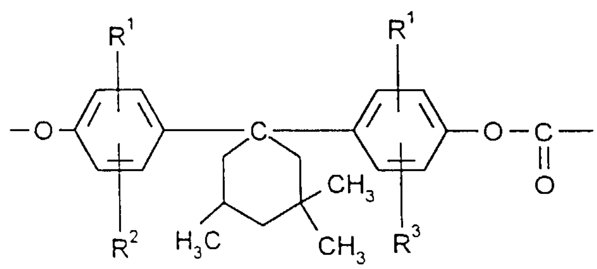 (Ig),

worin

$R^1$ und $R^2$ die für Formel (I) genannte Bedeutung haben, besonders bevorzugt aber Wasserstoff sind.

Diese Polycarbonate besitzen außer hoher Wärmeformbeständigkeit eine gute UV-Stabilität und ein gutes Fließverhalten in der Schmelze.
Durch die beliebige Kombination mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 Mol-% bis 10 Mol-% und ganz besonders von 100 Mol-% bis 20 Mol-%, bezogen auf die Gesamtmenge von 100 Mol-% an Diphenoleinheiten, in Polycarbonaten enthalten.

**Beschichtungsmassen**

Als Beschichtungsmaterialien (B) sind Lacksysteme geeignet, deren vernetzende Komponenten Acrylat-, Allyl-, Epoxy-, Silanol-, Isocyanat-, Anhydrid-, Melaminformaldehydfunktionen aufweisen. Umfassende Beschreibungen solcher Lacksysteme finden sich in: "Lehrbuch der Lacke und Beschichtungen", Herausgeber: Dr. Hans Kittel Verlag W.A. Colomb in der H. Heenemann GmbH Stuttgart-Berlin; in: "Lackkunstharze" von Hans Wagner, Hans Friedrich Sarx im Carl Hanser Verlag München 1971; speziell für Epoxy-Harze in "Epoxy Resins, Chemistry and Technology" herausgegeben von Clayton A. May und Yoshio Tanaka bei Marcel Dekker, Inc., New York 1973, Kapitel 7, Seite 451 ff.

**Beispiele**

**A. Polycarbonatformkörper beschichtet mit einem Acrylatlack (Nicht erfindungsgemäß)**

3 mm dicke Platten (105 x 150 x 3 mm) aus einem Copolycarbonat auf Basis des Diphenols Ib und von Bisphenol A (Apec HT KU 1-9350® mit Tg = 185°C der Bayer AG) un zum Vergleich ein Polycarbonat auf Basis Bisphenol A (Makrolon 3108® mit Tg = 148°C der Bayer AG) wurden mit Isopropanol gereinigt und mittels einer mechanischen Vorrichtung in die folgende Mischung getaucht und gleichmäßig während 120 Sek. aus der Mischung gezogen. Anschließend wurden die so beschichteten Platten in einen Rahmen eingespannt und je einmal von der

Ober- bzw. Unterseite mit UV-Strahlen [UV-Quecksilbermitteldruckbestrahlungsanlage (Leistung 80 W/cm)] unter Stickstoff gehärtet.

Mischung

| | |
|---|---|
| 80 Gew.-Teile | Lackmischung A |
| 20 Gew.-Teile | Hexandioldiacrylat |
| 5 Gew.-Teile | N-Vinylpyrrolidon |
| 3 Gew.-Teile | 2,2-Dimethyl-2-phenylacetophenon |

Lackmischung A

In einem 2 l-Rundhalskolben, der mit Rührer, Innenthermometer und Gaseinleitungsrohr versehen ist, wurden

| | |
|---|---|
| 314,8 g | Hydroxyethylacrylat |
| 768 g | Hexandiolbisacrylat |
| 0,5 g | Di-tert.-butylhydrochinon |
| 0,25 g | Di-butyl-zinndilaurat |

vorgelegt.

Bei 40 bis 45°C und unter Durchleiten von trockener Luft wurden anschließend 453,1 g eines Polyisocyanats auf Basis Hexamethylendiisocyanat, das als Hauptkomponente das Biuret aus drei Molekülen Hexamethylendiisocyanat enthält, zugetropft und die Reaktionsmischung nach Zutropfende auf 60 bis 65°C solange erhitzt, bis die NCO-Zahl unter 0,1 % abgesunken war, was im allgemeinen nach 6 Stunden der Fall war.

Zur Beurteilung der Haftung der Beschichtung und deren Witterungsstabilität wurde eine Gitterschnittprüfung durch Einritzen eines Rasters von 6 x 6 Linien mit einem Abstand von jeweils 1 mm in die Beschichtung mit anschließendem Aufdrücken sowie schnellem Abziehen eines Klebebandes durchgeführt. Die Einteilung in Gt 0 bis Gt 5 erfolgte danach entsprechend der Maßgabe der DIN 53 151.

Folgende Werte wurden erhalten:

| Beispiel | Gt unbewittert | Gt nach 1000 Stunden Xenon-WOM | Gt nach 3000 Stunden Xenon-WOM |
|---|---|---|---|
| Apec HT KU 1-9350 | 0 | 0 | 0 |
| Vergleich Makrolon 3108 | 0 | 1 | 3 |

**B. Polycarbonatformkörper, beschichtet mit einem Epoxid-Lack**

Als Beispiel für Epoxidlacke werden Beschichtungskompositionen gemäß EP-A 0 524 524 verwendet.

Die Epoxi-Gruppen-haltigen, OH-Gruppen-freien Verbindungen sind dabei aliphatische Epoxiverbindungen und cycloaliphatische Epoxiverbindungen. Die Zahl der Epoxigruppen liegt zwischen 1 und 6, vorzugsweise zwischen 1 und 3.

Beispiele für aliphatische Epoxiverbindungen sind solche der Formel (B I)

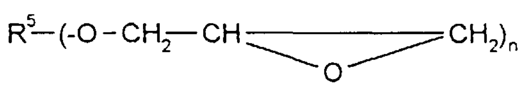

(B I)

worin

n eine ganze Zahl von 1 bis 6, vorzugsweise von 1 bis 3 ist und

$R^5$ ein n-bindiges $C_1$-$C_{15}$-Alkan oder ein n-bindiger $C_6$-$C_{36}$-Aromat ist.

Beispiele für $C_1$-$C_{15}$-Alkane $R^5$ sind Methan, Ethan, Propan, Butan, Isobutan, die isomeren Pentane, Hexane, Octane, Decane, Dodecane und Pentadecane.

Beispiele für $C_6$-$C_{36}$-Aromaten $R^5$ sind Benzol, Naphthalin, Anthracen, Alkyl-substituierte Benzole, Halogen-substituierte Benzole, gegebenenfalls Alkyl-substituierte Diphenyle sowie Verbindungen der Formel (B $I^1$)

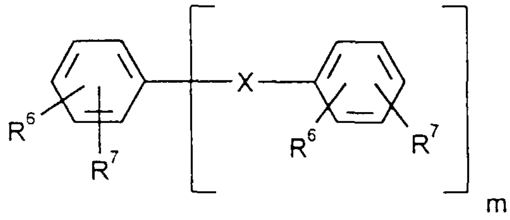

(B $I^1$)

worin

m 1 oder 2 ist und

$R^6$ und $R^7$ unabhängig voneinander H, Br, Cl, $CH_3$- oder $C_2H_5$ sind und

X ein Brückenglied wie -O-, -S-, -$SO_2$-, -CO-, ein $C_1$-$C_5$-Alkyliden oder ein $C_3$-$C_{10}$-Cycloalkyliden ist.

Bevorzugte $C_1$-$C_5$-Alkyliden sind Methylen und Isopropyliden, bevorzugte $C_3$-$C_{10}$-Cycloalkylidene sind Cyclopentyliden und Cyclohexyliden sowie alkylsubstituierte Cyclopentylidene und Cyclohexylidene wie 3,5,5,-Trimethylcyclohexyliden und 2,4,4-Trimethyl-cyclopentyliden.

Diese Epoxiverbindungen gemäß Formel (B I) sind literaturbekannt (s. beispielsweise US-Patent 3 018 262 oder "Handbook of Epoxy Resins", Lee and Neville, McGruw-Hill Book Co., New York 1967) oder nach bekannten Verfahren erhältlich, beispielsweise durch Umsetzung eines mehrwertigen Phenols, beispielsweise eines Diphenols mit Epichlorhydrin.

Ein Beispiel dafür ist der bis-epoxidierte Propoxy-ether vom Bisphenol A der folgenden Formel

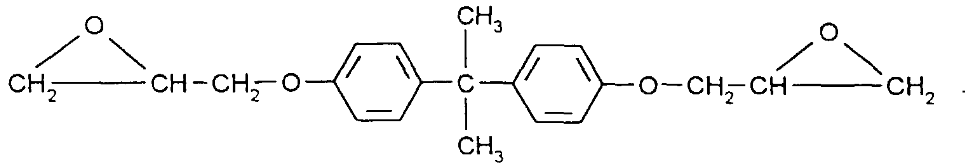

Weitere Beispiele für aliphatische Epoxiverbindungen sind Octadecylenoxid, Epichlorhydrin, Dipentendioxid, Glycid und Styroloxid.

Beispiele für cycloaliphatische Epoxiverbindungen sind Epoxicyclohexancarboxylate wie 3,4-Epoxycyclohexylmethyl-3,4-epoxy-cyclohexancarboxylat, 3,4-Epoxy-2-methylcyclohexylmethyl-3,4-epoxy-2-methylcyclohexancarboxylat, Bis-(3,4-epoxy-6-methylcyclohexylmethyl)-adipat. Solche Epoxid-Gruppen-haltige Verbindungen sind in US 3 117 099 beschrieben. Weitere Beispiele sind Vinyl-cyclohexenoxid und Bis-(2,3-epoxicyclopentyl)-ether.

Photoinitiatoren gemäß Komponente D) sind solche, die Epoxide polymerisieren können.

Geeignete Photoinitiatoren sind beispielsweise solche, die unter UV-Bestrahlung eine Lewis-Säure freisetzen, die die Polymerisation der Epoxigruppen einleiten kann.

Solche Photoinitiatoren sind bekannt und können in bekannter Weise hergestellt werden (J. Am. Chem. Soc. 91 (1969), 145; J. Org. Chem. 35 (1970), 2532; US 2 807 648; Bull. Soc. Chem. Belg. 73 (1964), 546; J. Am. Chem. Soc. 51 (1929), 2587).

Die erfindungsgemäß geeigneten Photoinitiatoren gehören zur Klasse der Onium-Salze und können in drei Gruppen eingeteilt werden, nämlich in die Halonium-Photoinitiatoren, in die Onium-Photoinitiatoren mit Elementen der Gruppe VIa des Periodensystems der Elemente - etwa die Sulfonium-Photoinitiatoren - und drittens in die Phosphonium-Photoinitiatoren.

Oniumsalze der genannten Art als Photoinitiatoren sind bekannt, beispielsweise aus US 4 026 707, US 3 981 897 und US 4 069 055. Typische und häufig eingesetzte Vertreter sind beispielsweise:

$Ph_3S^{\oplus}PF_6^{\ominus}$, $Ph_3S^{\oplus}$ $SbF_6^{\ominus}$ und

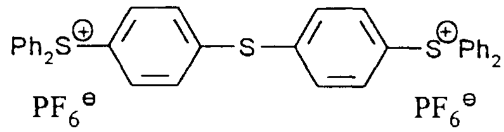

Erfindungsgemäß geeignete Sensibilisatoren gemäß Komponente E) sind bekannt (s. beispielsweise Kirk-Othmer, Encyclopedia, Vol. 2, Seiten 194 bis 197, 2. Auflage, John Wiley & Sons, 1965).

Typische Beispiele hierfür sind: 4,4'-(Bis-dimethylamino)-benzophenon, Benzoflavin, Thioxanthon, Aminoxanthene, Acridin-Gelb.

Die Vermischung der Komponenten erfolgt nach üblichen Verfahren, z.B. bei Raumtemperatur unter Ausschluß von direkter Lichteinwirkung.

Den erfindungsgemäß zu verwendenden Mischungen können während oder nach ihrer Herstellung noch für Polycarbonatüberzüge übliche Additive wie Stabilisatoren, UV-Absorber, Farbstoffe in solchen Mengen zugemischt werden, daß die Photopolymerisation und die Transparenz der Beschichtungen nicht beeinträchtigt wird.

Die erfindungsgemäße Beschichtung der Polycarbonatformkörper kann nach üblichen Verfahren, beispielsweise durch Tauchen, Besprühen, Beschleudern oder Walzen der Polycarbonatformkörper, erfolgen, insbesondere eignen sich Spritz- und Tauchverfahren.

Die Härtung der Beschichtungen wird beispielsweise durch UV-Strahlung ausgelöst, wozu handelsübliche UV-Strahler Verwendung finden, woran sich die Temperung der Beschichtungen anschließen kann.

Es ist ferner möglich, die beschichteten Polycarbonatformkörper vor der Härtung zu erwärmen, eventuell durch IR-Strahler, und dann bei erhöhter Temperatur mittels UV-Strahlung zu härten.

Die in den folgenden Beispielen beschriebene Beschichtungskomposition wurde auf Platten aus einem Copolycarbonat auf Basis des Diphenols Ib und des Bisphenol A (Apec HT KU 1-9350 mit Tg = 185°C der Bayer AG) bzw. zum Vergleich ein Polycarbonat auf Basis Bisphenol A (Makrolon 3108 mit Tg = 148°C der Bayer AG) mit den Maßen 105 x 150 x 3 mm mittels eines Spincoaters appliziert. Die Drehgeschwindigkeit wurde so variiert, daß die Schichtdicke nach der Härtung zwischen 5 bis 10 µm betrug. Die Härtung erfolgte mittels einer UV-Bestrahlungsanlage der Firma IST, Typ 200-11-1-Tr.

Die Bandgeschwindigkeit betrug 2 m/min. Anschließend wurde nachgetempert. Direkt nach UV-Bestrahlung sind die Beschichtungskompositionen, wenn nicht anders angegeben, klebfrei, jedoch noch nicht kratzfest.

<u>Beschichtungskomposition</u>

100 Gew.-Teile 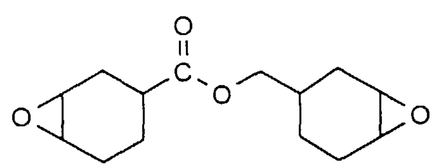

2 Gew.-Teile 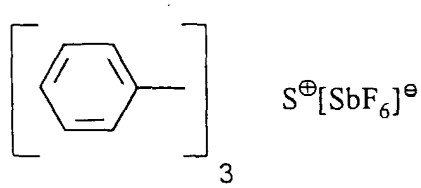

Folgende Werte werden erhalten:

| Beispiel | Substrat | Temperung | GT unbewittert | GT 1000 h bewittert |
|---|---|---|---|---|
| 1 | Apec HT KU 1-9350 | 130°C/ 30 min | 0 | 1 |
| 2 | Apec HT KU 1-9350 | 160°C/ 10 min | 0 | 0 |
| 3 | Makrolon 3108 | 130°C/ 30 min | 1 | 3 |

### C. Polycarbonatformkörper, beschichtet mit Silikonlacken

Silikonlacke sind im wesentlichen thermisch aushärtende Lacke, die vorzugsweise durch Kondensationsreaktion zu -Si-O-Si-Verknüpfungen vernetzen. Parallel dazu können auch andere Vernetzungsmechanismen ablaufen. Derartige Lacksysteme sind z.B. beschrieben in den US-Patenten 3 790 527, 3 865 755, 3 887 514, 4 243 720, 4 278 804, 4 680 232, 4 006 271, 4 476 281, in den DE-AS 4 011 045, 4 122 743, 4 020 316, 3 917 535, 3 706 714, 3 407 087, 3 836 815, 2 914 427, 3 135 241, 3 134 777, 3 100 532, 3 151 350, in den DOS 3 005 541, 3 014 411, 2 834 606, 2 947 879, 3 016 021.

Als Beispiel für einen Polysilikonlack werden Beschichtungskompositionen gemäß DE-OS 2 914 427 verwendet. Die Beschichtungsmassen bestehen aus:

A) 10 bis 40 Gew.-%, bezogen auf das Gesamtgewicht der Beschichtungsmasse, einer teilweise hydrolysierten Siloxanverbindung, die durch Hydrolyse in Wasser bei etwa 50 bis 80°C während einer Zeit von etwa 1 bis 12 Stunden mindestens einer der folgenden Verbindungen erhalten wird:

(a) eines Kohlenwasserstofftrialkoxysilans der Formel $R'Si(OR'')_3$, worin R' eine Alkylgruppe mit 1 bis 4 Kohlenstoffatomen, eine Phenyl- oder Vinylgruppe und R'' eine Alkylgruppe mit 1 bis 4 Kohlenstoffatomen bedeuten,
und/oder

(b) Co-Kondensationsprodukten von (a) und 1 bis 40 Gew.-% eines Phenyl oder Vinyltrialkoxysilans, worin die Alkoxygruppe 1 bis 4 Kohlenstoffatome enthält,
und/oder

(c) Co-Kondensationsprodukten von 1 Mol von (a) und 0,05 bis 1 Mol Tetraalkoxysilan, worin die Alkoxygruppe 1 bis 4 Kohlenstoffatome enthält,
und/oder

(d) Co-Kondensationsprodukten von 1 Mol von (a) und 0,05 bis 1 Mol Dialkyldialkoxysilan, worin die Alkyl- und Alkoxygruppen 1 bis 4 Kohlenstoffatome enthalten,

B) 0 bis 40 Gew.-%, bezogen auf das Gesamtgewicht der Beschichtungsmasse, einer wäßrigen Dispersion von kolloidalem Siliziumdioxid,

C) 0 bis 5 Gew.-%, bezogen auf das Gesamtgewicht des Überzugsmittels, eines veretherten Methylolmelamins,

D) 0,5 bis 30 Gew.-%, bezogen auf das Gesamtgewicht der Beschichtungsmasse, Essigsäure sowie

E) ein inertes organisches Lösungsmittel, dadurch gekennzeichnet, daß die Beschichtungsmasse zusätzlich 0,05 bis 15 Gew.-%, bezogen auf das Gesamtgewicht der Beschichtungsmasse, eines blockierten Polyisocyanates enthält.

Die Kohlenwasserstoff-Trialkoxysilane (1) sind funktionelle Siloxanverbindungen der Formel $R'Si(RO'')_3$, worin R' eine Alkylgruppe mit 1 bis 4 Kohlenstoffatomen, eine Phenyl-, oder eine Vinylgruppe bedeutet und R'' eine Alkylgruppe mit 1 bis 4 Kohlenstoffatomen bedeutet. Methyltriethoxysilan ist bevorzugt. Ein Teilhydrolysat von Kohlenwasserstofftrialkoxysilanen wird erhalten, indem man Wasser zu Kohlenwasserstofftrialkoxysilanen bringt und das entstehende Material bei einer Temperatur von 50 bis 80°C während 1 bis 10 Stunden erwärmt. Die Herstellung solcher Teilhydrolysate ist an sich bekannt und beispielsweise in der US-Patentschrift 3 451 838, DE-OS 1 923 290 und in der US-PS 4 006 271 beschrieben.

Ein teilweise hydrolysiertes Co-Kondensationsprodukt, das im wesentlichen 1 Mol des Kohlenwasserstofftrialkoxysilans als Hauptkomponente und 0,05 bis 1 Mol Tetraalkoxy-($C_1$ bis $C_4$)-Silan als zusätzliche Komponente enthält, bildet einen Überzug mit verbesserter Härte.

Ein teilweise hydrolysiertes Co-Kondensationsprodukt aus 1 Mol Kohlenwasserstofftrialkoxysilan und 0,05 Mol Dialkyl-($C_1$ bis $C_4$)-dialkoxy-($C_1$ bis $C_4$)-silan bildet einen weichen Überzug.

Zusätze von wäßrigen Dispersionen von kolloidalem Siliziumdioxid zum teilweise hydrolysierten (Co)-Kondensationsprodukt aus Alkyltrialkoxysilan und gegebenenfalls Tetraalkoxysilan bilden Überzüge mit verbesserter Härte.

Die gegebenenfalls mitverwendeten veretherten Methylolmelamine sind technische Produkte, die in an sich bekannter Weise hergestellt werden. Spezielle Beispiele für diese Verbindungen sind Hexaalkoxymethylmelamine wie Hexamethoxymethylmelamin, Hexaaethoxymethylmelamin, Hexapropoxymethylmelamin, Hexaisopropoxymethylmelamin, Hexabutoxymethylmelamin und Hexacyclohexyloxymethylmelamin.

Das veretherte Methylolmelamin wird vorzugsweise in einer Menge von 0 bis 150 Gewichtsteilen auf 100 Gewichtsteile (berechnet als $SiO_2$) des partiellen Hydrolyseprodukts der Tetraalkoxysilanverbindung bzw. der kolloidalen Kieselsäure verwendet. Bei Zusatz von mehr als 150 Gewichtsteilen verethertem Methylolmelamin nimmt die Haftfestigkeit und die Härte der Beschichtung ab. Der Zusatz des veretherten Methylolmelamins verleiht der Beschichtung sowohl Härte als auch Biegsamkeit.

Die zugesetzten verkappten Polyisocyanate sind lösungsmittelfreie, gegebenenfalls 2 bis 4 Gew.-% Polyether enthaltende, stabile wäßrige Emulsionen blockierter Isocyanate, bei denen als emulgierende Komponente Salze von Diaminosulfonsäuren verwendet werden. Sie werden hergestellt durch Umsetzung beliebiger, vorzugsweise di- bis tetrafunktioneller Polyisocyanate mit Verbindungen, die gegenüber Isocyanatgruppen reaktionsfähige Molekülgruppierungen aufweisen. Hierfür kommen unter anderem sekundäre oder tertiäre Alkohole, C-H-acide Verbindungen, Oxime, Lactame, Phenole, N-Alkylamide, Imide, Imidazole, Triazole oder Alkalibisulfite in Frage. Vorzugsweise werden C-H-acide Verbindungen, insbesondere aktivierte Methylengruppen enthaltende Verbindungen, wie z.B. Malonsäuredialkylester, Acetessigsäurealkylester oder Acetylaceton eingesetzt.

Die Umsetzung der Polyisocyanatfunktion mit der gegenüber Isocyanatgruppen reaktionsfähigen Molekülgruppierung erfolgt in Gegenwart bestimmter Mengenanteile von aromatischen, aliphatischen oder araliphatischen Diaminsulfonsäuren bzw. derer Alkali- oder Ammoniumsalze.

Die verwendeten blockierten Polyisocyanate sind durch Umsetzung von Polyisocyanaten mit Blockierungsmitteln wie z.B. Malonsäurediethylester oder Acetessigsäureethylester in an sich bekannter Reaktion erhältlich. Die Löslichkeit bzw. Dispergierbarkeit des blockierten Polyisocyanats beruht in der Einbeziehung von hydrophilen Komponenten in die Additionsreaktion, deren ionische oder nichtionische wasserdispergierend wirkende Polyethylenoxid-Segmente beim Aufbau des Polymeren mit eingebaut werden.

Durch den Einbau der ionischen oder nichtionischen hydrophilen Gruppen werden die betreffenden blockierten Polyisocyanate ihrerseits so weit hydrophil, daß sie in Wasser oder in wäßrig-alkoholischen Lösungen oder Zubereitungen löslich oder stabil dispergierbar und verträglich mit den für die Thermoplastbeschichtung geeigneten Zubereitungen sind.

Die Verwendung der oben beschriebenen blockierten Isocyanate führt zu Überzügen mit verbesserter Haftung und Elastizität, ohne die Kratzfestigkeit und Härte des Überzuges nachteilig zu beeinflussen.

Die organischen Lösungsmittel, die zusätzlich zur Essigsäure verwendet werden, sind nicht kritisch. Es kommen hierfür Alkohole, Ketone, Ether und/oder aromatische Kohlenwasserstoffe in Betracht. Zur Herstellung des Überzugsmittels sind von diesen Lösungsmitteln Ethanol und Isopropanol besonders bevorzugt. Die Menge an organischen Lösungsmitteln muß ausreichen, um die teilweise hydrolysierte Verbindung zusammen mit der Essigsäure und den übrigen erwähnten Zusatzmitteln vollständig zu lösen und um die Konzentration an der teilweise hydrolysierten Verbindung auf 5 bis 15 Gew.-%, berechnet als Feststoffe und bezogen auf das Gesamtgewicht des Überzugsmittels, einzustellen.

Um Thermoplaste mit dem Überzugsmittel zu beschichten, kann man irgendwelche Verfahren wie Eintauch-, Sprüh- und Gießverfahren verwenden. Die so beschichteten Thermoplastkörper werden dann erwärmt, um das Überzugsmittel zu härten.

**Beschichtungsmaterial:**

Herstellung der Grundkomponenten:

a) Zu 300 g kolloidaler Kieselsäure mit 30 Gew.-% $SiO_2$-Gehalt werden 19,8 g Eisessig, 210 g destilliertes Wasser und 227 g Isopropanol gegeben. Nach gründlicher Durchmischung werden 900 g Methyltriethoxysilan zugesetzt

und die Mischung unter Rühren auf 60°C erwärmt. Man beläßt während 4 Stunden bei dieser Temperatur und fügt anschließend weitere 1200 g Isopropanol zur Mischung hinzu. Nach Abkühlen des Produktes auf Raumtemperatur wird die schwach opake Lösung filtriert.

b) In einem mit Rührer und Rückflußkühler versehenen Gefäß werden 340 g Isopropanol, 190 g Tetraethoxysilan und 360 g Methyltriethoxysilan vorgelegt. Dieses Gemisch wird mit 180 g 0,05 n Salzsäure versetzt und zu Durchführung der Cohydrolyse fünf Stunden unter Rückfluß erwärmt. Nach der Umsetzung wird das Gemisch auf Raumtemperatur abgekühlt. Man erhält eine Lösung, die ein Teilhydrolysat von Tetraethoxysilan (5,1 %, berechnet als $SiO_2$) und Teilhydrolysat von Methyltriethoxysilan (12,6 %, berechnet als $CH_3SiO_{1,3}$) enhält.

Vor Verwendung als Beschichtungsmittel werden die beiden Komponenten im Verhältnis 1:1 miteinander vermischt und in einer Mischung aus 60 Gewichtsteilen n-Butanol, 40 Gew.-Teilen Essigsäure und 20 Gew.-Teilen Toluol gelöst und 1,5 Gew.-Teile des folgenden Isocyanats (1) hinzugegeben.

**Herstellung des blockierten Isocyanats (1)**

370 g Malonsäurediethylester werden bei Raumtemperatur mit 2,7 g Natriumphenolat 15 Minuten verrührt. Man setzt 500 g eines biuretisiereten Hexamethylendiisocyanats (23,8 % NCO-Gruppen) zu und rührt nach Abklingen der exothermen Reaktion 3 Stunden bei 90°C nach. Sodann werden 40 g eines auf n-Butanol gestarteten Ethylenoxid-Polyethers (MG = 2000) und 1 ml Zinn-(II)-octoat zugegeben und weitere 3 Stunden bei 90°C gerührt. Unter Erhöhung der Rührerumdrehungszahl setzt man nun eine Lösung von 46 g Natrium-2,4-diaminobenzolsulfonat in 150 ml Wasser zu und rührt 2 Stunden bei 60°C. Dann werden 200 ml Isopropanol hinzugegeben.
Man erhält eine klare, gelbe, mit Wasser verdünnte Flüssigkeit. Die Lösung enthält ca. 76 Gew.-% Feststoff. Der Gehalt an blockierten NCO-Gruppen beträgt 7,6 %.

Beschichten von Substraten und Prüfung der Eigenschaften der Beschichtungen:

Platten aus einem Copolycarbonat auf Basis des Diphenols Ib und des Bisphenols A (Apec HT KU 1-935 mit einer Glastemperatur Tg = 185°C der Bayer AG) bzw. zum Vergleich ein Polycarbonat auf Basis Bisphenol A (Makrolon 3108 (Tg = 148°C der Bayer AG) mit den Maßen 105 x 150 x 3 mm wurden mit Isopropanol gereinigt und durch Tauchen in das obengenannte Beschichtungsmaterial bei einer Tauchgeschwindigkeit v = 100 cm $min^{-1}$ mit einer Lackschicht von 20 µm beschichtet. Nach 10 min Ablüften bei Raumtemperatur wurden die beschichteten Platten bei erhöhten Temperaturen getrocknet. Dabei wurden Trocknungszeit und Trocknungstemperatur variiert. Die Schichtdicke des Kratzfestlackes betrug nach Trocknung 5 µm.

Die beschichteten Platten wurden nach erfolgter Aushärtung 2 Tage bei Raumtemperatur gelagert und sodann folgenden Prüfungen unterworfen. Die Ergebnisse der Prüfungen sind aus Tabelle I ersichtlich.

Haftfestigkeit auf dem Trägermaterial

Die auf die Platte aufgebrachte ausgehärtete Schicht wird bis zum Substrat mit einer scharfen Klinge kreuzweise eingekerbt, daß 100 Zellen mit einer Fläche von 1 $mm^2$ gebildet werden. Ein Cellophanklebeband wird dann fest auf die kreuzweise eingeschnittenen Linien aufgeklebt und mit einem 90° Winkel zur aufgetragenen Schicht abgezogen. Das Verfahren wird dreimal wiederholt. Die erhaltenen Haftungswerte werden in fünf Klassen eingeteilt von 0 (keine Entlaminierung) bis 5 (vollständige Entlaminierung) abhängig von der Zahl der zurückbleibenden Zellen (DIN 53 151).

**Ergebnisse**

| Plattenmaterial | Härtungstemperatur (°C) | Härtungszeit (min) | Haftung Gitterschnitt / Tesa | |
|---|---|---|---|---|
| | | | unbewittert | bewittert 1000 h |
| Apec KU 1-9350 | 130 | 10 | 0 | 2 |
| Apec KU 1-9350 | 150 | 30 | 0 | 1 |
| Apec KU 1-9350 | 150 | 10 | 0 | 2 |
| Apec KU 1-9350 | 170 | 10 | 0 | 0 |
| Makrolon 3108 | 130 | 10 | 4 | 4 |

(fortgesetzt)

| Plattenmaterial | Härtungstemperatur (°C) | Härtungszeit (min) | Haftung Gitterschnitt / Tesa | |
|---|---|---|---|---|
| | | | unbewittert | bewittert 1000 h |
| Makrolon 3108 | 130 | 45 | 1 | 4 |

**Patentansprüche**

1. Verfahren zur Beschichtung von Polycarbonatformteilen, dadurch gekennzeichnet, daß man auf die Oberfläche eines Formkörpers aus einem Polycarbonat mit $M_w$ von 20 000 bis 300 000 auf Basis eines Diphenols der Formel (Ia) in Mengen von 100 Mol-% bis 10 Mol-%, bezogen auf die Gesamtmenge von 100 Mol-% an Diphenoleinheiten

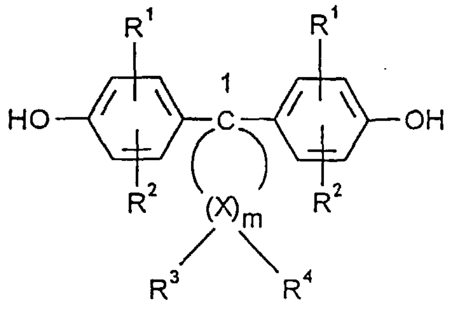

(Ia),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m 4 oder 5,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X $R^3$ und $R^4$ gleichzeitig Alkyl bedeuten,
ein Beschichtungsmaterial (B), das als vernetzbare Komponenten Agenzien mit Acrylat-, Allyl-, Epoxid-, Silanol-, Isocyanat-, Anhydrid-, Melamin- funktionen oder deren Kombination besitzt, in einer Dicke von 0,5 bis 200 µm aufträgt und thermisch bei Temperaturen von 130 °C bis 220°C oder durch Bestrahlung bei Temperaturen von 130 °C bis 220 °C aushärtet, wobei thermisch bzw. photochemisch härtende Katalysatoren zugesetzt werden können.

**Claims**

1. Process for coating polycarbonate mouldings, characterised in that, to the surface of a moulded body composed of a polycarbonate having $M_w$ of 20,000 to 300,000 and based on a diphenol corresponding to formula (Ia), in quantities of 100 mol.% to 10 mol.%, based on the total quantity of 100 mol.% of diphenol units

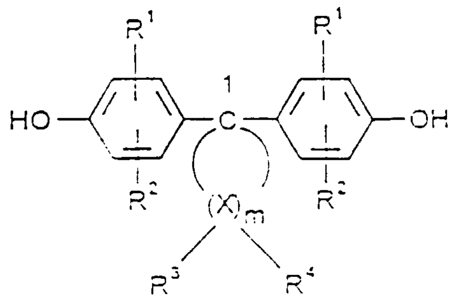

(1a),

wherein

$R^1$ and $R^2$ independently of one another denote hydrogen, halogen, preferably chlorine or bromine, $C_1$-$C_8$ alkyl, $C_6$-$C_5$ cycloalkyl, $C_6$-$C_{10}$ aryl, preferably phenyl, and $C_7$-$C_{12}$ aralkyl, preferably phenyl-$C_1$-$C_4$ alkyl, in particular benzyl,

m is 4 or 5,

$R^3$ and $R^4$ are individually selectable for each X and independently of one another denote hydrogen or $C_1$-$C_6$ alkyl and

X denotes carbon,

with the proviso that, on at least one atom X, $R^3$ and $R^4$ simultaneously denote alkyl,
a coating material (B), which possesses as cross-linkable components agents having acrylate, allyl, epoxide, silanol, isocyanate, anhydride, melamine functional groups or combinations thereof, is applied in a thickness of from 0.5 to 200 µm and cured thermally at temperatures of from 130°C to 200°C or by irradiation at temperatures of from 130°C to 220°C, and thermally or photochemically curing catalysts can be added.

## Revendications

**1.** Procédé pour revêtir des pièces moulées en polycarbonate, caractérisé en ce que, sur la surface d'un corps moulé consistant en un polycarbonate.de poids moléculaire $\overline{M}_w$ 20000 à 300000 à base d'un diphénol de formule (Ia), en quantités de 100 mol % à 10 mol %, par rapport à la quantité totale de 100 mol % de motifs de diphénols

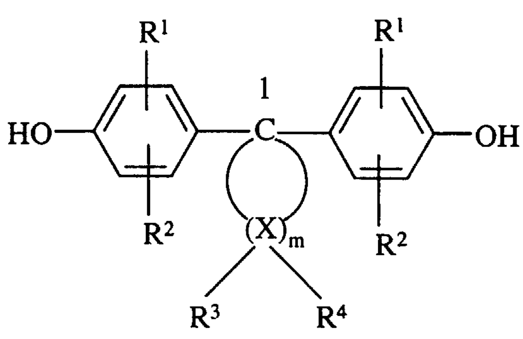

(Ia),

dans laquelle

$R^1$ et $R^2$ représentent chacun, indépendamment l'un de l'autre, l'hydrogène, un halogène, de préférence le chlore ou le brome, un groupe alkyle en $C_1$-$C_8$, cycloalkyle en $C_5$-$C_6$, aryle en $C_6$-$C_{10}$, de préférence phényle, ou aralkyle en $C_7$-$C_{12}$, de préférence phényl-alkyle en $C_1$-$C_4$, plus spécialement benzyle,

m est égal à 4 ou 5

$R^3$ et $R^4$, qui peuvent être choisis individuellement pour chaque atome X, représentent chacun, indépendamment l'un de l'autre, l'hydrogène ou un groupe alkyle en $C_1$-$C_6$ et

X représente le carbone,

sous réserve que, sur au moins un atome X, $R^3$ et $R^4$ représentent tous deux des groupes alkyle,

on applique une composition de revêtement (B) contenant en tant que composants réticulables des agents à fonctions acrylate, allyle, époxide, silanol, isocyanate, anhydride, mélamine ou leurs combinaisons, à une épaisseur de 0,5 à 200µm et on durcit à la chaleur à des températures de 130 à 200°C ou par irradiation à des températures de 130 à 220°C, avec adjonction facultative de catalyseurs du durcissement thermique ou photochimique.